# EUROPEAN PATENT SPECIFICATION

(11) **EP 0 299 067 B1**
(45) Date of publication and mention of the grant of the patent: **20.01.1993**
(21) Application number: 87900883.7
(22) Date of filing: 21.01.1987
(51) Int. Cl.: A01G 31/00, A01G 1/00, C12N 5/00

(54) **SUPPORT OF CULTURE MEDIUM FOR CULTURING PLANT**
ZUCHTMEDIUM FÜR PFLANZEN
SUPPORT POUR MILIEU DE CULTURE DE PLANTES

(43) Date of publication of application: 18.01.1989
(73) Proprietor: Toyo Boseki Kabushiki Kaisha, Osaka-shi Osaka 530 (JP)
(72) Inventor: TAKI, Eiichiro, Nabari-shi Mie 518-04 (JP)
(74) Representative: Gaunt, Robert John
(86) International application number: JP8700037
(87) International publication number: WO8805256

(56) References cited:
- GB-A- 1 562 182
- JP-A-56 131 318
- JP-A-61 181 320
- JP-B- 5 029 971
- US-A- 4 403 446

## Description

This invention relates to an artificial retainer for plant culture media which is suitable for the growing of seedlings, for the cultivation of plants, and for the cultivation of plant cells. It is suited for use with all kinds of plants, including vegetables and floriferous plants.

To date, natural soil has generally been used as the retainer for plant culture media. However, the amount of preparation and conditioning necessary with soil, such as digging-up, sieving, disinfection, fertilizer application, acidity control, etc., involves much labour and hard work. Consequently, there have been problems under the recent labour situation. Furthermore, there have recently come to light cases where plant cultivation is hindered by the harmful effects of insufficient care for soil conditioning due, for instance, to repeated cultivation or by the outbreak of disease. Under such circumstances, attempts have been made at cultivation without using natural soil, but using instead an artificial retainer for plant culture media, such as rock wool. The cultivation of plant cells, etc., has also been attempted by utilizing the structure and water retentivity of such material. However, rock wool may cause root rotting because its water retentivity is too high. In addition, it has problems in handling: it is pricky to the touch and is bad for health when inhaled. Moreover, in respect of its physical shape retention, its density and hardness are uneven depending upon its individual parts. Besides, it represents strong acidity because certain components of rock wool are soluble and active, and in addition, calcium and magnesium are eluted. Rock wool has thus proved awkward for use in plant cultivation and plant cell cultivation.

US-A-4403446 describes a hydroponic growth medium in the form of a disposable tubular fibrous element which consists of axially oriented fibres that possess various characteristics. GB-A-1562182 refers to a horticultural capillary substrate comprising a laminate of a water impermeable sheet and a textile fabric. The latter component is comprised of an assembly of fibres which has substantial surface area in relation to its thickness. The resulting substrates may be used as "capillary mats", whereby water is caused to wick through the textile fabric. JP-A-56-131318 discloses the use of highly water-absorptive fibres in a retainer for plant culture media.

This invention is intended to provide a retainer for plant culture media which has no problems with component elution, can control culture medium components without disorder, can freely determine culture medium components, can perform cultivation with suitably determined kinds and quantities of the components, has no need of pH control, can retain a suitable quantity of water after watering and has many gaps which contain a utilizable amount of air. In this invention, the term "media" means nourishing liquids for plant cultivation or culture liquids formulated for plant cell cultivation.

According to the present invention there is provided a retainer for plant culture media which comprises a fibrous block body formed of an adhesion mixture of a) polyester fibres, said fibres being of 25 to 150 mm in length and 0.5 to 100 denier in fineness, and b) heat bondable short fibres having, at least on their surface, a component with a melting point that is at least 20^{o}C lower than that of the polyester fibres, the proportion of polyester fibres to heat bondable short fibres being from 9:1 to 6:4 by weight, the thickness of the fibrous block body being from 0.5 to 15 cm and its density being from 0.005 to 0.1 g/cm³.

With regard to the fibrous block body of which the retainer for plant culture media of this invention is composed, it is at least necessary for this to be comprised of polyester fibres which are completely free from component elution, are extremely stable in physical and chemical properties, and have a rigidity lower than that of inorganic fibres, such as rock fibres, thereby giving no irritation to the skin when touched and causing no harm even if the fibres should enter the human body by breathing. It is desirable that the polyester fibres should be present in a proportion of at least more than 50%. Other types of fibres may be included, such as natural fibres.

It is necessary for the polyester fibres to have a length of 25-150 mm and a fineness of 0.5-100 denier. Fibres that are longer or shorter than the specified range cause troubles in production as it is difficult to form a card web for shaping the block body. Moreover, it is necessary that the fibre fineness should be 0.5-100 denier. With fibres of a fineness less than 0.5 denier, bulkiness is not obtained upon block body shaping, and this brings about too high a density of the block, and like rock wool, too good a water retentivity and too poor a water permeability, thereby tending to cause problems such as root rotting. On the contrary, when the fineness of the fibres exceeds 100 denier, a coarse block is formed, which interferes with the generation of capillary action, thereby making the water retentivity and the diffusion of water into the block insufficient. Also, when the fineness of the fibres is more than 100 denier, the development of the roots spreading in the block is hindered, thus adversely affecting the growth of the plant.

When the fibre length and the fibre fineness are within the above-mentioned ranges, all of the fibres used need not necessarily have the same fixed values: that is to say, fibres of different lengths and different finenesses may be mixed together.

The above-mentioned polyester fibres are mixed with heat bondable short fibres having, at least on their surface, a component with a melting point that is at least 20^{o}C lower than that of the polyester fibres.

Said heat bondable short fibres are such that a lower melting point component is spun with a higher melting point component in a side-by-side structure or in a sheath-core structure so that the former component can appear at least on the surface. An example of such a combination of components is polypropylene/polyester.

It is necessary that the melting point difference should be at least 20^{o}C. A difference less than this is undesirable, since at such a difference it is impossible to cope with problems such as non-melted parts generated from heat irregularity which increases in accordance with an increase of the thickness. Favourable melting point differences lie between 20^{o}C and 200^{o}C. The fibre length of said heat bondable short fibres is preferably the same as that of the aforementioned polyester fibres, for the ease of card passage for web formation.

It is necessary that the mixing ratio of the polyester fibres to the heat bondable short fibres should be from 9:1 to 6:4 by weight. When the mixing ratio of the heat bondable short fibres is less than 10%, a few bonded points are formed, and hence only a fluffy soft block is made. Such a block is not desirable as a culture medium retainer for supporting plants. When the mixing ratio of the heat bondable short fibres exceeds 40%, the block formed is solid and hard, thereby interfering with plant growth.

The fibrous block body that composes the retainer for plant culture media of this invention is obtained by the steps of mixing the fibres, carding the mixture, piling up the resulting card webs into layers, pressing down the card webs by means of a caterpillar while applying to the card webs a temperature higher than the softening point of the lower melting point component, thus fusing only the lower melting point component, and thereby retaining the shape.

The appropriate density for the fibrous block body is 0.005-0.1 g/cm³. When the density is less than 0.005 g/cm³, the block body will become too coarse, thereby becoming poor in water retentivity and water diffusion. On the contrary, a density exceeding 0.1 g/cm³ is not favourable, because the block will then become too dense, worsening the water permeability and causing troubles in the growth of plant roots.

The thickness of the fibrous block body is necessarily from 0.5-15 cm. With a non-woven shaped sheet of a thickness less than 0.5 cm, roots will grow within the block, and the block cannot support the plant. When the thickness exceeds 15 cm, shaping is difficult using present day techniques and thus its commercialization is difficult. If a large thickness is desired, a number of block bodies may be piled up and used as one block body.

### Example 1

A mixture was formed with 40% polyester fibres (1 denier, 38 mm cut), 30% polyester fibres (10 denier, 6.4 mm cut), and 30% polyethylene/polyester heat bondable fibres (4 denier, 51 mm cut), and the mixture was carded to obtain card webs. The webs were piled in layers to form a block body having a thickness of 7 cm and a bulk density of 0.03 g/cm³, and it was heated and compressed for shaping. The block body was cut into a size 10 cm wide and 10 cm long (hereinafter referred to as block body A) and a size 30 cm wide and 90 cm long (hereinafter referred to as block body B). These materials do not require any pretreatment for planting, such as pH adjustment with sulphuric acid. This is different to rock wool which shows a high pH value before such treatment. These materials can thus be watered without treatment, and the gas phase ratio after watering was as much as 28%, showing an ideal culture medium characteristic.

First, tomato seedlings were nursed with block bodies A, and about three months after, the seedling nursing blocks were planted permanently on block bodies B at 40 cm intervals in rows.

During tomato plant cultivation, investigation was made for the state of growth, while there were given, in the form of drip infusion, quantities of water and a nourishing liquid corresponding to the vapourized quantities from the plants and the cultivation system.

Using rock wool culture medium, it was difficult to control the nourishing liquid concentrations and the pH values because of component elution, but these were extremely stable with the culture medium of this invention. The handling and control of the retainer was easy, and there was no great difference from those of natural soil cultivation in growth results, such as plant height, number of joints, largest length of leaves, diameter of stems, as observed three months after permanent planting, and in the total yield of tomatoes.

### Example 2

The block body obtained in Example 1 was formed into a thickness of 2 cm³ and was spread in an Erlenmeyer flask. After sterilization in an autoclave, a medium for plant cell cultivation was poured into the flask and the block body was maintained at a wetness so that its upper surface was a little wet by capillary action.

A stem top of dendrobium cultivated separately was placed on the upper surface of the block.

On the other hand, in another Erlenmeyer flask, a stem top of the same dendrobium as above was placed on an agar culture medium (which was composed of the above culture medium and shaped with agar). The propagation state of irregularly formed cells of the stem top was observed in comparison with that of the former.

The quantity of cell propagation on the above-mentioned block body after two weeks from placing clearly exceeded that of the agar medium, there being observed a difference in propagation speed.

Since the retainer for plant culture media of this invention is composed of polyester fibres, it does not elute the components, does not easily decompose or decay and is physically and chemically stable. By suitably selecting the fibre fineness and the shaped density, it is possible to freely design the water retentivity and water permeability in accordance with the kind of plants. Accordingly, the control of nutrient solutions or culture solutions is easy. Furthermore, since the density and the hardness of the block are constituted uniform, its usage is easy, and its industrial production is also possible. Moreover, its handling is safe: that is to say, when it is touched by the hand, it does not soil the hand, or there is no irritation to the hand, unlike rock wool, and since the block body maintains the medium by capillary action, when it is used for cell cultivation, the medium and oxygen consumed by the cells can be supplied very smoothly and effectively. Consequently, cell cultivation on a large scale becomes possible.

## Claims

1. A retainer for plant culture media comprising polyester fibres characterised in that it comprises a fibrous block body formed of an adhesion mixture of a) the polyester fibres, said fibres being of 25 to 150 mm in length and 0.5 to 100 denier in fineness, and b) heat bondable short fibres having, at least on their surface, a component with a melting point that is at least 20^{o}C lower than that of the polyester fibres,
the proportion of polyester fibres to heat bondable short fibres being from 9:1 to 6:4 by weight,
the thickness of the fibrous block body being from 0.5 to 15 cm and its density being from 0.005 to 0.1 g/cm³.

2. A retainer as claimed in claim 1, wherein the heat bondable short fibres are formed from a combination of polypropylene and polyester.

3. A retainer as claimed in claim 1 or claim 2, wherein the melting point of the heat bondable short fibres, or at least the component on their surface, is between 20^{o}C and 200^{o}C lower than that of the polyester fibres.

4. A retainer as claimed in any of the preceding claims, wherein the heat bondable short fibres are from 25 to 150 mm in length.

## Patentansprüche

1. Polyesterfasern enthaltendes Aufnahme-/Speichermittel für Pflanzenzuchtnährstoffe, dadurch gekennzeichnet, daß es einen faserigen Blockkörper umfaßt, der aus einer Verbundmischung aus a) den Polyesterfasern, die 25 bis 150 mm lang sind und eine Feinheit von 0,5 bis 100 denier aufweisen, und b) wärmeverbindbaren kurzen Fasern gebildet ist, die mindestens an ihrer Oberfläche eine Komponente mit einem mindestens 20^{o}C niedrigeren Schmelzpunkt als dem der Polyesterfasern aufweisen, wobei das Verhältnis von Polyesterfasern zu wärmeverbindbaren kurzen Fasern gewichtsmäßig von 9:1 bis 6:4, die Stärke des faserigen Blocks von 0,5 bis 15 cm und seine Dichte von 0,005 bis 0,1 g/cm³ beträgt.

2. Aufnahme-/Speichermittel nach Anspruch 1, bei dem die wärmeverbindbaren kurzen Fasern aus einer Kombination von Polypropylen und Polyester gebildet sind.

3. Aufnahme-/Speichermittel nach Anspruch 1 oder 2, bei dem der Schmelzpunkt der wärmeverbindbaren kurzen Fasern oder mindestens der der Komponente an deren Oberfläche zwischen 20^{o}C und 200^{o}C niedriger als der der Polyesterfasern ist.

4. Aufnahme-/Speichermittel nach einem der vorhergehenden Ansprüche, bei dem die wärmeverbindbaren kurzen Fasern eine Länge von zwischen 25 to 150 mm aufweisen.

## Revendications

1. Support destiné à retenir des milieux pour culture de plantes, ce support comprenant des fibres de polyester et étant caractérisé en ce qu'il comprend un corps en bloc fibreux formé d'un mélange, capable d'être uni par adhérence, de (a) des fibres de polyester ayant une longueur de 25 à 150 mm et une finesse correspondant à 0,5 à 100 deniers, et de (b) de courtes fibres scellables à chaud et ayant, au moins sur leur surface, un constituant dans le point de fusion est inférieur d'au moins 20 °C au point de fusion des fibres de polyester,
la proportion des fibres de polyester par rapport aux courtes fibres scellables à chaud se situant entre 9:1 et 6:4 en poids, l'épaisseur du corps en bloc fibreux étant de 0,5 à 15 cm et sa masse volumique étant comprise entre 0,005 et 0,1 g/cm³.

2. Support de retenue tel que revendiqué à la revendication 1, dans lequel les courtes fibres scellables à chaud sont formées d'une combinaison de polypropylène et de polyester.

3. Support de retenue tel que revendiqué dans la revendication 1 ou la revendication 2, dans lequel le point de fusion des courtes fibres scellables à chaud, ou au moins du constituant présent sur leur surface, est inférieur d'une valeur comprise entre 20 °C et 200 °C au point de fusion des fibres de polyester.

4. Support de retenue tel que revendiqué dans l'une quelconque des revendications précédentes, dans lequel les courtes fibres scellables à chaud ont une longueur comprise entre 25 et 150 mm.
